# EUROPEAN PATENT SPECIFICATION

(11) **EP 3 187 417 B1**
(45) Date of publication and mention of the grant of the patent: **11.12.2019**
(21) Application number: 15382678.9
(22) Date of filing: 30.12.2015
(51) Int. Cl.: B64D 13/02, B64D 13/06, B64D 13/08

(54) **AIR CONDITIONING SYSTEM**
KLIMAANLAGENSYSTEM
SYSTÈME DE CLIMATISATION

(43) Date of publication of application: 05.07.2017
(73) Proprietor: Airbus Operations S.L., 28906 Getafe (ES)
(72) Inventor: CASADO MONTERO, Carlos, E-28906 Getafe, Madrid (ES)
(74) Representative: ABG Intellectual Property Law, S.L.

(56) References cited:
- WO-A1-2008/014912
- FR-A1- 2 829 466
- US-A- 5 709 103

## Description

### TECHNICAL FIELD OF THE INVENTION

The present invention is related to the field of aircraft engines, in particular to the field of cooling systems.

### BACKGROUND OF THE INVENTION

The cabin of a modern passenger aircraft is air-conditioned usually both when the aircraft is flying and is on the ground by means of the aircraft's own air conditioning system. The aircraft air conditioning system is supplied with pressurized bleed air which is taken from an engine compressor or Auxiliary Power Unit compressor.

Typically, this air passes through a so called "air cycle machine" that comprises, among others, one or several heat exchangers, compressor and one or several turbines in order to cool it to a desired low temperature and pressure, . For the working of this kind of air conditioning system in the state of art, this air exiting the air cycle machine, that usually follows or acts performing an inverse Brighton cycle, is usually mixed in a mixing chamber with air recirculated from the cabin and exits in different pipes. These pipes exiting the mixing chamber may receive air at different temperatures from a manifold, in such a way that they blow air into the cabin at different temperatures.

Document FR 2829466 A1 discloses an air conditioning of an aircraft cabin implemented by a two-stage mechanical air compressor, a non-pneumatic energy supply system, and a pneumatic supply system. In a cold operating mode, compressed air is supplied to an air cooler, and in an economic mode the second stage compression air outlet is isolated from the air cooler.

Document WO 2008/014912 A1 discloses an aircraft air-conditioning unit including a compressor and a motor driving the compressor. A fuel cell system is connected directly to a control unit for controlling the motor driving the compressor, wherein the control unit is adapted to convert electrical energy directly generated by the fuel cell system into corresponding electrical control signals for controlling the motor driving the compressor.

### SUMMARY OF THE INVENTION

The present invention takes the air that already entered in the ram air channel that uses that air for cooling down the temperature in the heat exchangers of the air cycle machine to be compressed and used later on to feed the cabin either via mixing chambers or via an air temperature manifold, since this temperature will be higher than the one selected for the cabin. In this manner the drag is reduced as well as the power needed in the overall cycle, which is improved and therefore achieving lower fuel consumption.

Thus, the present invention provides an air conditioning system according to claim 1 and an aircraft according to claim 12 as an alternative solution to the aforementioned problems. All the features described in this specification, including the claims, description and drawings, can be combined in any way, except for the cases of mutually exclusive features. The dependent claims define preferred embodiments of the invention.

According to a first aspect, the invention provides an air conditioning system for a cabin of an aircraft, the air conditioning system comprising:
a pressurized air source which, when in its operative mode, provides work air with a pressure higher than 100 kPa;
a cooling air source, suitable for providing cooling air;
a main heat exchanger with a cold side and a hot side, the hot side comprising an inlet and an outlet and the cold side comprising an inlet and an outlet, in such a way that the inlet of the cold side of the main heat exchanger is in fluid communication with the cooling air source, and the inlet of the hot side of the main heat exchanger is in fluid communication with the pressurized air source;
a secondary duct which bleeds part of the air, from the outlet of the cold side of the main heat exchanger, or from the inlet of the cold side of the main heat exchanger;
a first valve configured to allow or restrict the pass of air bled to the secondary duct; mixing means and
a compressor with an inlet and an outlet, the inlet of the compressor being located in fluid communication with, the outlet of the cold side of the main heat exchanger or the inlet of the cold side of the main heat exchanger, a second valve being located in fluid communication with the outlet of the compressor;
wherein the outlet of the compressor is in fluid communication with the mixing means which in turn are in fluid communication with the cabin.

This air conditioning system allows using less air from the air pressurized source than the air conditioning systems known in the state of the art, since part of the air obtained from the atmosphere by the cooling air source is conveniently treated and added to the air to be introduced in the cabin.

According to the invention, the mixing means comprise, a manifold, comprising at least one inlet and at least one outlet, wherein at least one inlet of the manifold is in fluid communication with the outlet of the compressor, each inlet of the manifold comprising a third valve;
a mixing chamber comprising at least one inlet and at least one outlet, one of the inlets of the mixing chamber being fed by the outlet of the hot side of the main heat exchanger, and the at least one outlet of the mixing chamber being in fluid communication with the cabin;
wherein at least an outlet of the manifold is in fluid communication with an outlet of the mixing chamber, this outlet of the manifold comprising a fourth valve; and wherein each outlet of the mixing chamber is in fluid communication with the cabin.

In a particular embodiment, the mixing chamber comprises at least two inlets and a plurality of outlets, one of the inlets of the mixing chamber being fed by the outlet of the hot side of the main heat exchanger, one of the inlets of the mixing chamber being fed by the outlet of the compressor, and the plurality of outlets of the mixing chamber being in fluid communication with the cabin.

In a particular embodiment, the air conditioning system further comprises a bypass channel which puts the pressurized air source in fluid communication with the manifold and a fifth valve configured to allow or restrict the pass of air bled to the bypass channel.

In a particular embodiment, the mixing means comprise a mixing chamber comprising at least two inlets and a plurality of outlets, one of the inlets of the mixing chamber being fed by the outlet of the hot side of the main heat
exchanger, one of the inlets of the mixing chamber being fed by the outlet of the compressor, and the plurality of outlets of the mixing chamber being in fluid communication with the cabin.

These air conditioning systems have a better control of air temperature which is intended to be introduced in the cabin, as different temperatures may be obtained by the suitable setting of the outlets of the mixing chamber.

In a particular embodiment, the air conditioning system further comprises a secondary heat exchanger by means of which heat is transferred from the outlet of the compressor to the air exiting the cold side of the main heat exchanger.

In a particular embodiment, the air conditioning system further comprises a turbine with an inlet and an outlet, the inlet of the turbine being in fluid communication with an outlet of the cabin, wherein the compressor is driven by energy produced in the turbine.

This air conditioning system demands lower energy consumption, as the compressor does not need an external energy source to be moved.

In a particular embodiment, the air conditioning system further comprises a secondary heat exchanger by means of which heat is transferred from the outlet of the cabin to the air in the secondary duct.

In a particular embodiment, at least a second outlet of the manifold is in fluid connection with a second outlet of the mixing chamber.

In a particular embodiment, the main heat exchanger is comprised in an air cycling machine.

In a second inventive aspect, the invention provides an aircraft comprising an air conditioning system according to any embodiment of the first inventive aspect.

### DESCRIPTION OF THE DRAWINGS

These and other characteristics and advantages of the invention will be clearly understood in view of the detailed description of the invention and further in view of the preferred embodiments of the invention, with reference to the drawings. Preferred embodiments are given just as examples and are not intended to limit the scope of the present invention.
Figure 1 This figure shows a side view of a first embodiment of an air conditioning system according to the invention.
Figure 2 This figure shows a side view of an example of an air conditioning system not according to the invention.
Figure 3 This figure shows a side view of a third embodiment of an air conditioning system according to the invention.

### DETAILED DESCRIPTION OF THE INVENTION

Having outlined the object of the invention, specific non-limitative embodiments are described hereinafter.

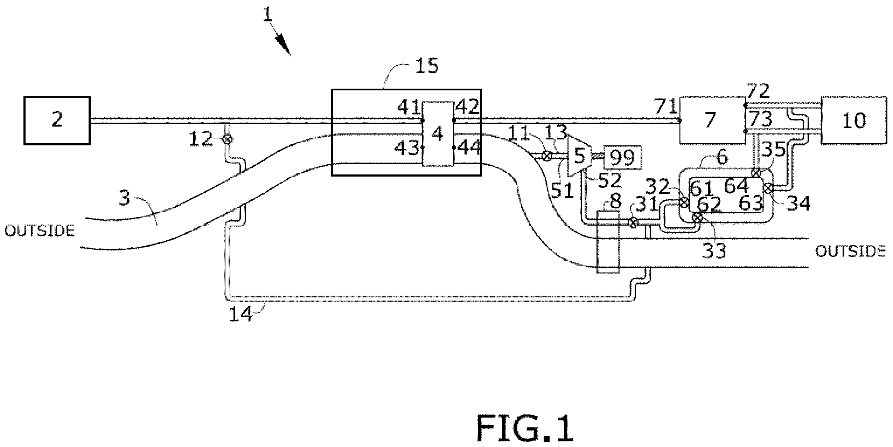

Figure 1 shows a particular embodiment of an air conditioning system according to the invention.

This figure shows an air conditioning system (1) for a cabin (10) of an aircraft, the air conditioning system (1) comprising:
a pressurized air source (2) which, when in its operative mode, provides work air with a pressure higher than 100 kPa;
a cooling air source (3), suitable for providing cooling air;
a main heat exchanger (4) with a cold side and a hot side, the hot side comprising an inlet (41) and an outlet (42) and the cold side comprising an inlet (43) and an outlet (44), the main heat exchanger being included in an air cycling machine (15);
a compressor (5) with an inlet (51) and an outlet (52), a second valve (31) being located in fluid communication with the outlet (52) of the compressor;
a mixing chamber (7) comprising an inlet (71) and two outlets (72, 73).

The inlet (43) of the cold side of the main heat exchanger (4) is in fluid communication with the cooling air source (3), and the inlet (41) of the hot side of the main heat exchanger (4) is in fluid communication with the pressurized air source (2). The main heat exchanger (4) thus allow a heat exchanging between the cooling air obtained in the cooling air source (3) and the work air obtained in the pressurized air source (2).

The inlet (51) of the compressor is located in fluid communication with the outlet (44) of the cold side of the main heat exchanger (4), so that the cooling air exiting the main heat exchanger (4) enters the compressor (5).

In a particular embodiment, the compressor (5) is moved by the energy provided by an electric motor (99).

In a further particular embodiment (not shown in the figures), the compressor (5) is moved by the energy provided by the air cycling machine (15).

This air conditioning system (1) comprises a secondary duct (13) which bleeds part of the air from the outlet (44) of the cold side of the main heat exchanger (4), wherein the air conditioning system (1) further comprises a first valve (11) configured to allow or restrict the pass of air bled to the secondary duct (13).

This air conditioning system (1) further comprises a secondary heat exchanger (8). This secondary heat exchanger (8) is used to transfer heat from the outlet (52) of the compressor (5) to the air exiting the cold side of the main heat exchanger (4).

In this embodiment, the air conditioning system (1) further comprises a bypass channel (14) which puts the pressurized air source (2) in fluid communication with the manifold (6) and a fifth valve (12) configured to allow or restrict the pass of air bled to the bypass channel (14).

In this embodiment, the air conditioning system (1) further comprises a manifold (6), comprising two inlets (61, 62) and two outlets (63, 64), wherein the two inlets (61, 62) of the manifold (6) are in fluid communication with the outlet (52) of the compressor, the second valve (31) being located between the two inlets (61, 62) of the manifold (6) and the outlet (52) of the compressor. Each inlet (61, 62) of the manifold (6) comprises a third valve (32, 33) and each outlet (63, 64) of the manifold (6) comprises a fourth valve (34, 35).

Each outlet (63, 64) of the manifold (6) is in fluid communication with an outlet (72, 73) of the mixing chamber (7) and each outlet (72, 73) of the mixing chamber (7) is in fluid communication with the cabin (10). Outlets (63, 64) of the manifold are used to control the final temperature obtained in the different outlets (72, 73) of the mixing chamber (7). By feeding each outlet (72, 73) of the mixing chamber (7) with one outlet (63, 64) of the manifold (6) which is at different temperature, different temperatures are obtained in each of the outlets (72, 73) of the mixing chamber (7). In other embodiments, the manifold (6) comprises more outlets.

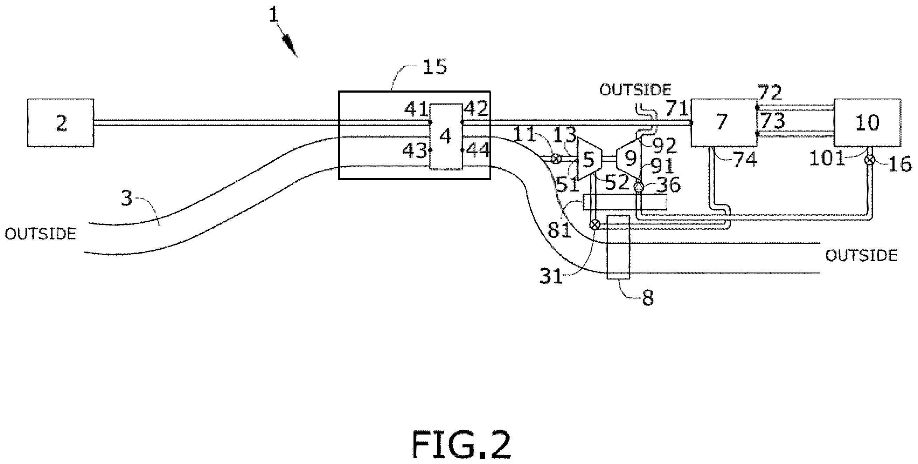

Figure 2 shows an example of an air conditioning system (1) not according to the invention.

This example does not comprise a bypass channel, and it does not comprise a manifold either.

Air enters and exits the cabin (10) so that it is renewed and conditioned. In consequence, the cabin comprises inlets and one outlet (101). In this embodiment, the outlet (101) of the cabin comprises a sixth valve (16).

In this particular example, the compressor (5) is moved by means of a turbine (9). This turbine (9) comprises an inlet (91) and an outlet (92). The inlet (91) of the turbine is in fluid communication with the outlet (101) of the cabin (10), so it is fed by air exiting the cabin (10). In this example, energy contained in the air exiting from the cabin is used to move the turbine (9) so that no more energy sources are used, thus saving more energy consumption in the air conditioning system of this example. In other examples, this turbine (9) is moved by means of air exiting the main heat exchanger (4) or by any other means. A third heat exchanger (81) is placed such that heat is transferred between the inlet of the turbine (91) and the exit of the compressor (52). A one way valve (36) is placed in the inlet of the turbine (91).

In this example, the outlet (52) of the compressor is in fluid communication with an inlet (74) of the mixing chamber. The other inlet (71) of the mixing chamber (7) is fed by the outlet (42) of the hot side of the main heat exchanger (4), and the outlets (72, 73) of the mixing chamber are in fluid communication with the cabin (10).

Because of this arrangement, fresh air coming from the cooling air source (3) is available to be part of the temperature control, and part of it may be introduced in the mixing chamber (7).

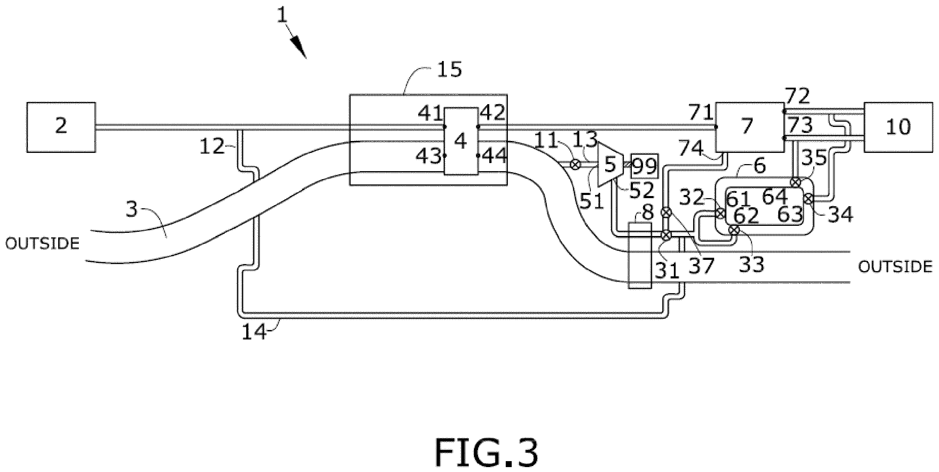

Figure 3 shows another embodiment of an air conditioning system (1) according to the invention.

This air conditioning system (1) is similar to the one shown in Figure 1, but the outlet (52) of the compressor (5) is in fluid communication with both an inlet (74) of the mixing chamber and with an inlet (61) of the manifold (6). There is a seventh valve (37) in the inlet (74) of the mixing chamber (7) to control this flow between the outlet (52) of the compressor (5) and the inlet (74) of the mixing chamber (7).

In the embodiments shown in these figures, the main heat exchanger (4) is comprised in an air cycling machine (15), although this is not an essential feature of the invention.

## Claims

1. Air conditioning system (1) for a cabin (10) of an aircraft, the air conditioning system (1) comprising:
a pressurized air source (2) which, when in its operative mode, provides work air with a pressure higher than 100 kPa;
a cooling air source (3), suitable for providing cooling air;
a main heat exchanger (4) with a cold side and a hot side, the hot side comprising an inlet (41) and an outlet (42) and the cold side comprising an inlet (43) and an outlet (44), in such a way that the inlet (43) of the cold side of the main heat exchanger (4) is in fluid communication with the cooling air source (3), and the inlet (41) of the hot side of the main heat exchanger (4) is in fluid communication with the pressurized air source (2);
a secondary duct (13) which bleeds part of the air, from the outlet (44) of the cold side of the main heat exchanger (4); or from the inlet (43) of the cold side of the main heat exchanger (4),
a first valve (11) configured to allow or restrict the pass of air bled to the secondary duct (13);
mixing means and
a compressor (5) with an inlet (51) and an outlet (52), the inlet (51) of the compressor being located in fluid communication with, the outlet (44) of the cold side of the main heat exchanger (4) or the inlet (43) of the cold side of the main heat exchanger (4), a second valve (31) being located in fluid communication with the outlet (52) of the compressor;
wherein the outlet (52) of the compressor is in fluid communication with the mixing means which in turn are adapted to be in fluid communication with the cabin (10),
wherein the mixing means comprise
a manifold (6), comprising at least one inlet (61, 62) and at least one outlet (63, 64), wherein at least one inlet (61) of the manifold (6) is in fluid communication with the outlet (52) of the compressor, each inlet (61, 62) of the manifold (6) comprising a third valve (32, 33);
a mixing chamber (7) comprising at least one inlet (71) and at least one outlet (72, 73), one of the inlets (71) of the mixing chamber (7) being fed by the outlet (42) of the hot side of the main heat exchanger (4), and the at least one outlet (72, 73) of the mixing chamber being adapted to be in fluid communication with the cabin (10);
wherein at least an outlet (63, 64) of the manifold (6) is in fluid communication with an outlet (72, 73) of the mixing chamber (7), this outlet (63, 64) of the manifold (6) comprising a fourth valve (34, 35);
and wherein each outlet (72, 73) of the mixing chamber (7) is adapted to be in fluid communication with the cabin (10).

2. Air conditioning system (1) according to claim 1, wherein the mixing chamber (7) comprises at least two inlets (71, 74) and a plurality of outlets (72, 73), one of the inlets (71) of the mixing chamber (7) being fed by the outlet (42) of the hot side of the main heat exchanger (4), one of the inlets (74) of the mixing chamber (7) being fed by the outlet (52) of the compressor (5), and the plurality of outlets (72, 73) of the mixing chamber being adapted to be in fluid communication with the cabin (10).

3. Air conditioning system (1) according to any of claims 1 or 2, further comprising a bypass channel (14) which puts the pressurized air source (2) in fluid communication with the manifold (6) and a fifth valve (12) configured to allow or restrict the pass of air bled to the bypass channel (14).

4. Air conditioning system (1) according to claim 1, wherein the mixing means comprise a mixing chamber (7) comprising at least two inlets (71, 74) and a plurality of outlets (72, 73), one of the inlets (71) of the mixing chamber (7) being fed by the outlet (42) of the hot side of the main heat exchanger (4), one of the inlets (74) of the mixing chamber (7) being fed by the outlet (52) of the compressor (5), and the plurality of outlets (72, 73) of the mixing chamber being adapted to be in fluid communication with the cabin (10).

5. Air conditioning system (1) according to claim 1, further comprising a secondary heat exchanger (8) by means of which heat is transferred from the outlet (52) of the compressor (5) to the air exiting the cold side of the main heat exchanger (4).

6. Air conditioning system (1) according to any of claims 1 to 4, further comprising a turbine (9) with an inlet (91) and an outlet (92), the inlet (91) of the turbine being adapted to be in fluid communication with an outlet (101) of the cabin (10), wherein the compressor (5) is driven by energy produced in the turbine (9).

7. Air conditioning system (1) according to claim 6, further comprising a secondary heat exchanger by means of which heat is transferred from the outlet (101) of the cabin to the air in the secondary duct (13).

8. Air conditioning system (1) according to any of claims 1 to 4, wherein the compressor (5) is adapted to be moved by the energy provided by an electric motor (99).

9. Air conditioning system (1) according to any preceding claims, wherein at least a second outlet (64) of the manifold (6) is in fluid connection with a second outlet (73) of the mixing chamber (7).

10. Air conditioning system (1) according to any preceding claims, further comprising an air cycling machine (15), wherein the main heat exchanger (4) is comprised in the air cycling machine (15).

11. Air conditioning system (1) according to any of claims 1 to 4 and claim 10, wherein the compressor (5) is adapted to be moved by energy provided by the air cycling machine (15).

12. Aircraft comprising an air conditioning system (1) according to any preceding claims.

## Patentansprüche

1. Klimaanlage (1) für eine Kabine (10) eines Luftfahrzeugs, wobei die Klimaanlage (1) aufweist:
eine Druckluftquelle (2), die in ihrem Betriebsmodus Arbeitsluft mit einem Druck über 100 kPa bereitstellt;
eine Kühlluftquelle (3), die zum Bereitstellen von Kühlluft geeignet ist;
einen Hauptwärmetauscher (4) mit einer kalten Seite und einer warmen Seite,
wobei die warme Seite einen Einlass (41) und einen Auslass (42) aufweist und die kalte Seite einen Einlass (43) und einen Auslass (44) so aufweist, dass der Einlass (43) der kalten Seite des Hauptwärmetauschers (4) in Fluidkommunikation mit der Kühlluftquelle (3) steht und der Einlass (41) der warmen Seite des Hauptwärmetauschers (4) in Fluidkommunikation mit der Druckluftquelle (2) steht;
eine Sekundärleitung (13), die einen Teil der Luft zapft, vom Auslass (44) der kalten Seite des Hauptwärmetauschers (4); oder vom Einlass (43) der kalten Seite des Hauptwärmetauschers (4),
ein erstes Ventil (11), das so konfiguriert ist, dass es den Durchgang von Luft ermöglicht oder beschränkt, die zur Sekundärleitung (13) gezapft wird; eine Mischeinrichtung und
einen Kompressor (5) mit einem Einlass (51) und einem Auslass (52), wobei der Einlass (51) des Kompressors in Fluidkommunikation mit dem Auslass (44) der kalten Seite des Hauptwärmetauschers (4) oder dem Einlass (43) der kalten Seite des Hauptwärmetauschers (4) steht, wobei ein zweites Ventil (31) in Fluidkommunikation mit dem Auslass (52) des Kompressors steht;
wobei der Auslass (52) des Kompressors in Fluidkommunikation mit der Mischeinrichtung steht, die ihrerseits geeignet ist, in Fluidkommunikation mit der Kabine (10) zu stehen,
wobei die Mischeinrichtung aufweist:
einen Verteiler (6) mit mindestens einem Einlass (61, 62) und mindestens einem Auslass (63, 64), wobei mindestens ein Einlass (61) des Verteilers (6) in Fluidkommunikation mit dem Auslass (52) des Kompressors steht, wobei jeder Einlass (61, 62) des Verteilers (6) ein drittes Ventil (32, 33) aufweist;
eine Mischkammer (7) mit mindestens einem Einlass (71) und mindestens einem Auslass (72, 73), wobei einer der Einlässe (71) der Mischkammer (7) durch den Auslass (42) der warmen Seite des Hauptwärmetauschers (4) gespeist wird und der mindestens eine Auslass (72, 73) der Mischkammer dazu ausgebildet ist, in Fluidkommunikation mit der Kabine (10) zu stehen;
wobei mindestens ein Auslass (63, 64) des Verteilers (6) in Fluidkommunikation mit einem Auslass (72, 73) der Mischkammer (7) steht, wobei dieser Auslass (63, 64) des Verteilers (6) ein viertes Ventil (34, 35) aufweist;
und wobei jeder Auslass (72, 73) der Mischkammer (7) dazu ausgebildet ist, in Fluidkommunikation mit der Kabine (10) zu stehen.

2. Klimaanlage (1) nach Anspruch 1, wobei die Mischkammer (7) mindestens zwei Einlässe (71, 74) und mehrere Auslässe (72, 73) aufweist, wobei einer der Einlässe (71) der Mischkammer (7) durch den Auslass (42) der warmen Seite des Hauptwärmetauschers (4) gespeist wird, einer der Einlässe (74) der Mischkammer (7) durch den Auslass (52) des Kompressors (5) gespeist wird und die mehreren Auslässe (72, 73) der Mischkammer dazu ausgebildet sind, in Fluidkommunikation mit der Kabine (10) zu stehen.

3. Klimaanlage (1) nach Anspruch 1 oder 2, ferner mit einem Bypass-Kanal (14), der die Druckluftquelle (2) in Fluidkommunikation mit dem Verteiler (6) versetzt, und einem fünften Ventil (12), das so konfiguriert ist, dass es den Durchgang von Luft ermöglicht oder beschränkt, die zum Bypass-Kanal (14) gezapft wird.

4. Klimaanlage (1) nach Anspruch 1, wobei die Mischeinrichtung eine Mischkammer (7) mit mindestens zwei Einlässen (71, 74) und mehreren Auslässen (72, 73) aufweist, wobei einer der Einlässe (71) der Mischkammer (7) durch den Auslass (42) der warmen Seite des Hauptwärmetauschers (4) gespeist wird, einer der Einlässe (74) der Mischkammer (7) durch den Auslass (52) des Kompressors (5) gespeist wird und die mehreren Auslässe (72, 73) der Mischkammer dazu ausgebildet sind, in Fluidkommunikation mit der Kabine (10) zu stehen.

5. Klimaanlage (1) nach Anspruch 1, ferner mit einem Sekundärwärmetauscher (8), mittels welchem Wärme vom Auslass (52) des Kompressors (5) zur Luft übertragen wird, die die kalte Seite des Hauptwärmetauschers (4) verlässt.

6. Klimaanlage (1) nach einem der Ansprüche 1 bis 4, die ferner eine Turbine (9) mit einem Einlass (91) und einem Auslass (92) aufweist, wobei der Einlass (91) der Turbine geeignet ist, in Fluidkommunikation mit einem Auslass (101) der Kabine (10) zu stehen, wobei der Kompressor (5) durch Energie angetrieben wird, die in der Turbine (9) erzeugt wird.

7. Klimaanlage (1) nach Anspruch 6, ferner mit einem Sekundärwärmetauscher, mittels welchem Wärme vom Auslass (101) der Kabine zur Luft in der Sekundärleitung (13) übertragen wird.

8. Klimaanlage (1) nach einem der Ansprüche 1 bis 4, wobei der Kompressor (5) dazu ausgebildet ist, durch die Energie bewegt zu werden, die durch einen Elektromotor (99) bereitgestellt wird.

9. Klimaanlage (1) nach einem der vorstehenden Ansprüche, wobei mindestens ein zweiter Auslass (64) des Verteilers (6) in Fluidkommunikation mit einem zweiten Auslass (73) der Mischkammer (7) steht.

10. Klimaanlage (1) nach einem der vorstehenden Ansprüche, ferner mit einer Luftumwälzmaschine (15), wobei der Hauptwärmetauscher (4) zur Luftumwälzmaschine (15) gehört.

11. Klimaanlage (1) nach einem der Ansprüche 1 bis 4 und Anspruch 10, wobei der Kompressor (5) dazu ausgebildet ist, durch Energie bewegt zu werden, die durch die Luftumwälzmaschine (15) bereitgestellt wird.

12. Luftfahrzeug mit einer Klimaanlage (1) nach einem der vorstehenden Ansprüche.

## Revendications

1. Système (1) de conditionnement d'air pour une cabine (10) d'un aéronef, le système (1) de conditionnement d'air comprenant :
une source d'air sous pression (2) qui, dans son mode de fonctionnement, fournit de l'air de travail à une pression supérieure à 100 kpa,
une source d'air de refroidissement (3), appropriée pour fournir de l'air de refroidissement,
un échangeur de chaleur principal (4) avec un côté froid et un côté chaud, le côté chaud comprenant une entrée (41) et une sortie (42) et le côté froid comprenant une entrée (43) et une sortie (44), de telle sorte que l'entrée (43) du côté froid de l'échangeur de chaleur principal (4) est en communication fluidique avec la source d'air de refroidissement (3) et l'entrée (41) du côté chaud de l'échangeur de chaleur principal (4) est en communication fluidique avec la source d'air sous pression (2),
un conduit secondaire (13) qui purge une partie de l'air, depuis la sortie (44) du côté froid de l'échangeur de chaleur principal (4), ou de l'entrée (43) du côté froid de l'échangeur de chaleur principal (4),
une première vanne (11) configurée pour permettre ou restreindre le passage de l'air purgé dans le conduit secondaire (13), des moyens de mélange et
un compresseur (5) avec une entrée (51) et une sortie (52), l'entrée (51) du compresseur étant située en communication fluidique avec, la sortie (44) du côté froid de l'échangeur de chaleur principal (4) ou l'entrée (43) du côté froid de l'échangeur de chaleur principal (4), une deuxième vanne (31) étant située en communication fluidique avec la sortie (52) du compresseur,
la sortie (52) du compresseur est en communication fluidique avec les moyens de mélange, qui, à leur tour, sont adaptés pour être en communication fluidique avec la cabine (10),
les moyens de mélange comprenant
un collecteur (6), comprenant au moins une entrée (61, 62) et au moins une sortie (63, 64), au moins une entrée (61) du collecteur (6) étant en communication fluidique avec la sortie (52) du compresseur, chaque entrée (61, 62) du collecteur (6) comprenant une troisième vanne (32, 33),
une chambre de mélange (7) comprenant au moins une entrée (71) et au moins une sortie (72, 73), l'une des entrées (71) de la chambre de mélange (7) étant alimentée par la sortie (42) du côté chaud de l'échangeur de chaleur principal (4), et ladite au moins une sortie (72, 73) de la chambre de mélange étant adaptée pour être en communication fluidique avec la cabine (10),
au moins une sortie (63, 64) du collecteur (6) étant en communication fluidique avec une sortie (72, 73) de la chambre de mélange (7), cette sortie (63, 64) du collecteur (6) comprenant une quatrième vanne (34, 35),
et chaque sortie (72, 73) de la chambre de mélange (7) étant adaptée pour être en communication fluidique avec la cabine (10).

2. Système (1) de conditionnement d'air selon la revendication 1, dans lequel la chambre de mélange (7) comprend au moins deux entrées (71, 74) et une pluralité de sorties (72, 73), une des entrées (71) de la chambre de mélange (7) étant alimentée par la sortie (42) du côté chaud de l'échangeur de chaleur principal (4), l'une des entrées (74) de la chambre de mélange (7) étant alimentée par la sortie (52) du compresseur (5), et la pluralité de sorties (72, 73) de la chambre de mélange étant adaptée pour être en communication fluidique avec la cabine (10).

3. Système (1) de conditionnement d'air selon l'une quelconque des revendications 1 ou 2, comprenant en outre un conduit de dérivation (14) qui met la source d'air sous pression (2) en communication fluidique avec le collecteur (6) et une cinquième vanne (12) configurée pour permettre ou restreindre le passage de l'air purgé dans le conduit de dérivation (14).

4. Système (1) de conditionnement d'air selon la revendication 1, dans lequel les moyens de mélange comprennent une chambre de mélange (7) comprenant au moins deux entrées (71, 74) et une pluralité de sorties (72, 73), une des entrées (71) de la chambre de mélange (7) étant alimentée par la sortie (42) du côté chaud de l'échangeur de chaleur principal (4), l'une des entrées (74) de la chambre de mélange (7) étant alimentée par la sortie (52) du compresseur (5), et la pluralité de sorties (72, 73) de la chambre de mélange étant adaptée pour être en communication fluidique avec la cabine (10).

5. Système (1) de conditionnement d'air selon la revendication 1, comprenant en outre un échangeur de chaleur secondaire (8) au moyen duquel la chaleur est transférée depuis la sortie (52) du compresseur (5) vers l'air sortant du côté froid de l'échangeur de chaleur principal (4).

6. Système (1) de conditionnement d'air selon l'une quelconque des revendications 1 à 4, comprenant en outre une turbine (9) avec une entrée (91) et une sortie (92), l'entrée (91) de la turbine étant adaptée pour être en communication fluidique avec une sortie (101) de la cabine (10), le compresseur (5) étant entraîné par l'énergie produite dans la turbine (9).

7. Système (1) de conditionnement d'air selon la revendication 6, comprenant en outre un échangeur de chaleur secondaire au moyen duquel de la chaleur est transférée depuis la sortie (101) de la cabine vers l'air dans le conduit secondaire (13).

8. Système (1) de conditionnement d'air selon l'une quelconque des revendications 1 à 4, dans lequel le compresseur (5) est adapté pour être déplacé par l'énergie fournie par un moteur électrique (99).

9. Système (1) de conditionnement d'air selon l'une quelconque des revendications précédentes, dans lequel au moins une deuxième sortie (64) du collecteur (6) est en connexion fluidique avec une deuxième sortie (73) de la chambre de mélange (7).

10. Système (1) de conditionnement d'air selon l'une quelconque des revendications précédentes, comprenant en outre une machine à cycles d'air (15), dans lequel l'échangeur de chaleur principal (4) est compris dans la machine à cycles d'air (15).

11. Système (1) de conditionnement d'air selon l'une quelconque des revendications 1 à 4 et la revendication 10, dans lequel le compresseur (5) est adapté pour être déplacé par l'énergie fournie par la machine à cycles d'air (15).

12. Aéronef comprenant un système (1) de conditionnement d'air selon l'une quelconque des revendications précédentes.
